# EUROPEAN PATENT APPLICATION

(11) **EP 4 549 779 A1**
(43) Date of publication of application: **07.05.2025**
(21) Application number: 23831605.3
(22) Date of filing: 29.06.2023
(51) Int. Cl.: F16G 13/02, F16G 13/06, C23C 26/00

(54) **CHAIN**

(30) Priority: 30.06.2022 JP 2022106099
(71) Applicant: Daido Kogyo Co., Ltd., Kaga-shi, Ishikawa 922-8686 (JP)
(72) Inventor: KITAMURA, Masayuki, Kaga-shi, Ishikawa 922-8686 (JP)
(74) Representative: Karakatsanis, Georgios
(86) International application number: PCT/JP2023/024280
(87) International publication number: WO 2024/005166

(57) **Abstract**

A chain includes a plurality of outer links each of which includes a pair of outer plates and pins connecting both end portions of the pair of outer plates, and a plurality of inner links each of which includes a pair of inner plates, bushes connecting both end portions of the pair of inner plates, and rollers rotatably fitted onto the bushes, the plurality of inner links being alternately connected to the outer links. An a-C:H type diamond-like carbon coatings (20) are formed on outer circumferential surfaces of the bush and the roller. A film thickness of the coating (20) is 1.5 to 4.0 µm, and a film thickness of the outer circumferential surface of the bush is formed to be equal to or more than a film thickness of the outer circumferential surface of the roller.

## Description

### TECHNICAL FIELD

The present invention relates to a chain.

### BACKGROUND ART

Hitherto, driving apparatuses for motorcycles, in which chains coated with ta-C coatings on outer surfaces of bushings and outer surfaces of rollers are wound around a drive pinion and a sprocket, have been devised (refer to PATENT LITERATURE 1). While the ta-C coatings exhibit extremely high hardness and significant attacking property to counterpart components, in a driving apparatus disclosed in PATENT LITERATURE 1, wear is mitigated by setting a surface roughness of the ta-C coating to Ra 0.03 µm to 0.2 µm and/or Rz 0.3 µm to 2 µm.

### CITATION LIST

### PATENT LITERATURE

PATENT LITERATURE 1: Japanese Translation of PCT international Application Publication No. 2021-501291

### SUMMARY OF INVENTION

### TECHNICAL PROBLEM

While, in this manner, efforts have been made to mitigate the wear as described above, the ta-C coatings possess extremely high hardness, and, inevitably, lead to a heightened tendency for the attacking property to counterpart components.

### SOLUTION TO PROBLEM

The present invention provides a chain with reduced wear.

One embodiment of the present invention is a chain including a plurality of outer links each of which includes a pair of outer plates and pins connecting both end portions of the pair of outer plates, and a plurality of inner links each of which includes a pair of inner plates, bushes connecting both end portions of the pair of inner plates, and rollers rotatably fitted onto the bushes, the plurality of inner links being alternately connected with the outer links, and coatings of an a-C:H type diamond-like carbon formed on outer circumferential surfaces of the bush and the roller, wherein a film thickness of each of the coatings is 1.5 to 4.0 µm and the film thickness of the outer circumferential surface of the bush is formed to be greater than the film thickness of the outer circumferential surface of the roller.

### ADVANTAGEOUS EFFECTS OF INVENTION

It is possible to provide a chain with reduced wear.

Other features and merits of the present invention will be revealed through the following descriptions that are referenced to attached drawings. To be noted, in the attached drawings, the same or substantially the same configurations are denoted by the same reference numerals.

### BRIEF DESCRIPTIONS OF DRAWINGS

FIG. 1 is a schematic diagram illustrating a chain transmission apparatus according to the present embodiment.
FIG. 2A is a plan view illustrating a chain according to the present embodiment.
FIG. 2B is a side view illustrating the chain according to the present embodiment.
FIG. 2C is a cross-sectional view illustrating a pin of the chain.
FIG. 3 is a schematic diagram illustrating a DLC coating according to the present embodiment.

### DESCRIPTION OF EMBODIMENTS

### Schematic Configuration of Chain Transmission Apparatus

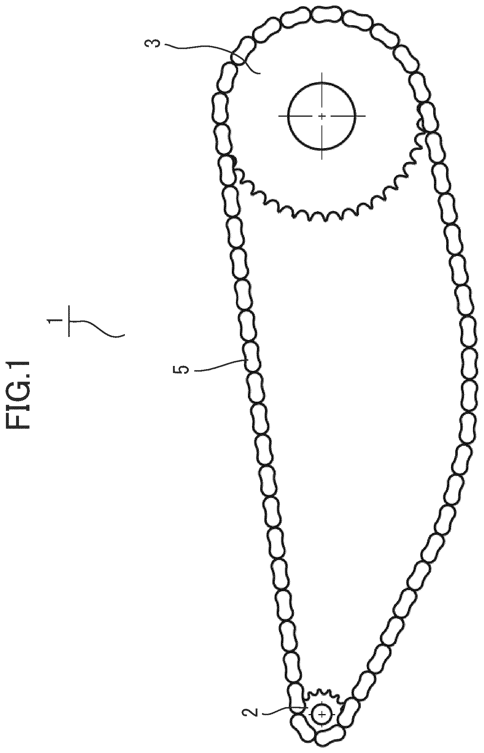

Hereinafter, the present embodiment will be described along drawings. A chain transmission apparatus 1 illustrated in FIG. 1 is a chain transmission apparatus for driving motorcycles, which are driven by a driving source such as an engine or a motor, for traveling, and includes a drive sprocket 2 driven by the driving source described above, a driven sprocket 3, and a chain 5 wound around the drive sprocket 2 and the driven sprocket 3.

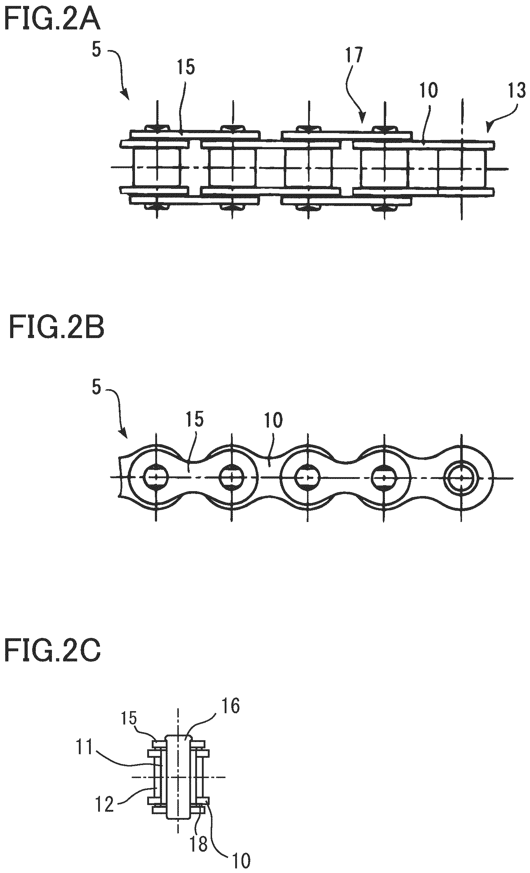

The chain 5 is constituted by a roller chain, as illustrated in FIGS. 2A to 2C, includes inner links 13 in each of which both end potions of a pair of inner plates 10 are connected by bushes 11 and rollers 12 are rotatably fitted onto the bushes 11, and outer links 17 in each of which both end portions of a pair of outer plates 15 are connected by pins 16, and is configured such that the inner links 13 and the outer links 17 are alternately and endlessly connected by inserting the pins 16 into the bushes 11. The inner links 13 are fixed by press-fitting end portions of the bushes 11 into bush holes formed in the inner plates 10, and the outer links 17 are fixed such that end portions of the pins 16 are fitted into pin holes of the outer plates 15 and are swaged. In addition, between the inner plate 10 and the outer plate 15, a seal ring is arranged in a form of retaining grease enclosed between the pin 16 and the bush 11. This seal ring (gasket) 18 is preferably provided with an external coating or internally compounded with chemicals to reduce friction.

For example, as the external coating to reduce the friction, it is desirable to apply a PTFE (polytetrafluoroethylene) or similar coating to the exterior of the seal ring 18. In addition, for example, rubber and resin can be used as chemicals that are compounded to the seal ring 18 for reducing the friction.

In addition, as a material used for the seal ring 18 described above, considering oil resistance, it is acceptable to use materials such as acrylic rubber (ACM/ AEM), hydrogenated nitrile rubber (H-NBR), nitrile rubber (NBR), or fluorinated rubber polymers, or it is acceptable to form the seal ring 18 using PTFE described above.

As the acrylic rubber described above, a copolymer containing an acrylic ester, such as the acrylic ester copolymer (ACM) and the acrylic ester-ethylene copolymer (AEM)), is applicable, and, as polymer components of a rubber composition that forms the seal ring 18, it is possible to use these either independently or in combination.

In addition, there are no restrictions on the hydrogenated nitrile rubber used in the seal ring 18, and it is possible to use rubbers with various nitrile contents, hydrogenation degrees, and Mooney viscosities. For example, the hydrogenated nitrile rubber that is used includes, but is not limited to, Zetpol 0020, Zetpol 1010, Zetpol 1020, and Zetpol 2020 manufactured by Zeon Corporation, THERBAN 1706, THERBAN 1707, THERBAN 1907, and THERBAN 2207 manufactured by Bayer AG, and CHEMISAT manufactured by Goodyear Tire and Rubber Company. In addition, it is acceptable to use by blending a plurality of hydrogenated nitrile rubbers. To be noted, a hydrogenation degree of the hydrogenated nitrile rubber is preferably equal to or more than 90%, and the hydrogenation degree of equal to or more than 95% is more preferable.

Further, as for the nitrile rubber described above, an acrylonitrile butadiene rubber having an acrylonitrile content of 15 to 48%, preferably, 22 to 35%, with a Mooney viscosity ML1+4 (100°C) of 25 to 85, preferably 30 to 60 can be used, and, practically, it is acceptable to use commercially available products. For example, it is possible to use N240S and N241 characterized by JSR Corporation and the like.

In addition, as for the fluorinated rubbers, any fluorinated rubbers containing a fluorine atom can be used as a material for the seal ring 18. For example, vinylidene fluoride-based fluorinated vinylidene rubbers (FKM) and the like can be used. In addition, examples of usable binary fluorinated rubbers include such as vinylidene fluoride-hexafluoropropylene system, vinylidene fluoride-chlorotrifluoroethylene system, tetrafluoroethylene-perfluoro system, and tetrafluoroethylene-propylene system. Further, examples of usable ternary fluorinated rubbers include such as vinylidene fluoride-hexafluoropropylene-tetrafluoroethylene system, vinylidene fluoride-perfluoro alkyl vinyl ether-tetrafluoroethylene system, and tetrafluoroethylene-propylene-vinylidene fluoride system. To be noted, the ternary fluorinated rubbers exhibit superior low-temperature resistance. In addition, as for the fluorinated rubbers, in addition to a configuration of using a single type, it is also possible to configure a composition using a combination of a plurality of types. It is possible to determine a degree of the polymerization of the fluorinated rubbers to obtain appropriate sealing performance and sliding characteristics according to the usage of the sealing member.

### DLC coating

Next, a DLC (diamond-like carbon) coating of the chain 5 will be described. The bush 11 and the roller 12 of the chain 5 described above are coated with an a-C:H type DLC film.

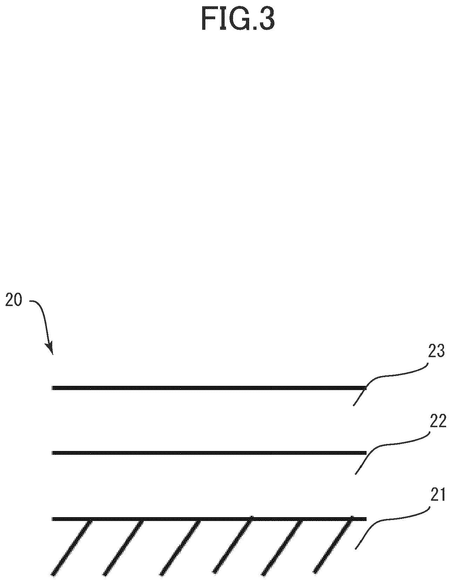

In particular, as illustrated in FIG. 3, each of the DLC coatings 20 applied to outer circumferential surfaces of the bush 11 and the roller 12 described above includes an intermediate layer 22 formed on a base material 21 of the bush 11 and the roller 12, and a DLC layer 23.

The base material 21 is constituted of steel materials such as high-carbon chromium bearing steel or chromium-molybdenum steel, and its surface is provided with polishing such as barrel polishing. The intermediate layer 22 formed on the surface of the base material is, for example, a metal carbide layer containing elements such as chromium (Cr), silicon (Si), and tungsten (W), and is a layer softer (lower hardness) than the DLC layer 23. By interposing the relatively softer intermediate layer 22 as described above between the base material 21 and the DLC layer 23, the delamination of the DLC layer 23 is inhibited. To be noted, the intermediate layer 22 may be formed of a single layer or a plurality of layers. In addition, since, if the intermediate layer 22 is polished, foreign matter becomes likely to enter between the intermediate layer and the DLC layer 23 and adhesion decreases, the intermediate layer 22 is not polished.

The DLC layer 23 is formed of the a-C:H type DLC. The a-C:H type DLC contains hydrogen within the film, for example, 5 to 50 at%, and is structured such that carbon atoms with graphite-like sp2 hybridized orbitals are contained relatively more than carbon atoms with diamond like sp3 hybridized orbitals. In addition, due to the inclusion of hydrogen, the a-C:H type DLC forms a softer film with a lower friction coefficient compared to a ta-C type DLC.

The DLC layer 23 fabricated by the a-C:H type DLC described above is formed, for example, through sputtering by introducing a hydrocarbon gas as a feedstock containing hydrogen, and its surface roughness is set to be Ra of 0.025 µm to 0.4 µm. More preferably, the DLC layer 23 has a surface roughness of Ra 0.025 µm to 0.25 µm, and, even more preferably, within a range of Ra 0.1 µm to 0.25 µm. In addition, in a case of expressing in Rz, the surface roughness of the DLC layer 23 is preferably within a range of Rz 0.025 µm to 2.5 µm. To be noted, besides the sputtering, the DLC layer 23 may be formed using PVD methods such as ion plating, thermal CVD methods using the hydrocarbon gas or an organic solvent vapor as a feedstock, plasma CVD methods, or the like.

In addition, a film thickness of the DLC layer 23 is set to be 1.5 to 4.0 µm, and, in the present embodiment, a film thickness T1 of the DLC layer on the outer circumferential surface of the bush is set to be equal to or more than a film thickness T2 of the DLC layer on the outer circumferential surface of the roller (T1 ≥ T2).

The hardness of the DLC layer 23 is set to be 10 GPa to 25 GPa. When exceeding 25 GPa, an attacking property to counterpart material increases. If it is less than 10 GPa, there is a risk that durability can not be ensured and desired wear resistance may not be achieved. Since, as described above, the film thickness is set to be 1.5 µm to 4.0 µm and the hardness is set to be 10 GPa to 25 GPa, the adhesion of the DLC layer 23 achieves an HF1 to HF4 rating, and is satisfactory. If the film thickness and hardness fall within the aforementioned ranges, the film thickness T1 of the DLC layer 32 on the outer circumferential surface of the bush and the film thickness T2 of the DLC layer 32 on the outer circumferential surface of the roller may be set to be approximately the same level. To be noted, the adhesion was evaluated using an indentation test conducted with a Rockwell hardness tester in accordance with the German VDI 3198 standard.

As described above, in the present embodiment, the coating 20 of the a-C:H type diamond-like carbon is formed on the outer circumferential surface of the roller 12 of the chain 5 that slides on the sprockets 2 and 3 and the outer circumferential surface of the bush 11 that is in sliding contact with the roller 12. By applying the high hardness and high durability a-C:H type diamond-like carbon coating 20 to heavily worn areas within the chain 5, even if conditions such as oil film rupture occur between bush and roller or roller and sprocket tooth surfaces, it is possible to suppress the wear of heavily worn components such as the bush 11 and the roller 12 described above, and it is possible to extend a service life of the chain. In addition, by improving the wear resistance, a user can reduce the frequency of lubricant applications to the chain 5, so that a reduction of maintenance loads of the user is possible and, coupled with an enabled reduction of the lubricant used, it is possible to decrease also the environmental burden.

Further, the a-C:H type DLC possesses high durability, yet its hardness is lower than the ta-C type DLC, so that the attacking property to counterpart material is lower than the ta-C type DLC. Therefore, it is possible to prevent the sprockets 2 and 3, which are counterpart members of the roller 12, an inner circumferential surface of the roller 12, or the like from being extremely worn, and it is possible to extend a service life of the overall chain transmission apparatus.

In addition, since, at the sliding portions of the chain described above, the friction resistance is low and the sliding characteristics are satisfactory, it is possible to improve fuel efficiency of drivetrains of motorcycles and the like that are equipped with the chain transmission apparatus 1. To be noted, while, in the embodiment described above, the DLC coating 20 is applied only to the outer circumferential surfaces of the bush 11 and the roller 12, it is acceptable to apply the DLC coating 20 to the whole outer circumferential surfaces of the bush 11 and the roller 12. In addition, not limited to the bush 11 and the roller 12, it is acceptable to apply the DLC coating 20 also to sliding components such as the sprockets 2 and 3 and the pin 16. Further, while, in the embodiment described above, an example of applying the present invention with respect to the seal chain has been described, for example, the present invention may be applied to seal-less chains. In addition, the present invention may be also applied to such as bush chains that do not include the roller 12, and, further, is not limited to the transmission chains for the motorcycles, for example, it is acceptable to apply the present invention to such as timing chains of automobile engines.

### INDUSTRIAL APPLICABILITY

The present invention can be broadly implemented in the field of the chains.

The present invention is not limited to the embodiments described above, and can be modified and deformed in various manners without departing from the spirit and scope of the present invention.
Therefore, to publicize the scope of the present invention, the following claims are attached.

### REFERENCE SIGNS LIST

5: chain, 10: inner plate, 11: bush, 12: roller, 13: inner link, 15: outer plate, 16: pin, 17: outer link, 20: coating (DLC coating)

## Claims

1. A chain comprising:
a plurality of outer links each of which includes a pair of outer plates and pins connecting both end portions of the pair of outer plates;
a plurality of inner links each of which includes a pair of inner plates, bushes connecting both end portions of the pair of inner plates, and rollers rotatably fitted onto the bushes, the plurality of inner links being alternately connected to the outer links; and
coatings of an a-C:H type diamond-like carbon formed on outer circumferential surfaces of the bush and the roller,
wherein a film thickness of each of the coatings is 1.5 to 4.0 µm, and
wherein the film thickness of the outer circumferential surface of the bush is formed to be equal to or more than the film thickness of the outer circumferential surface of the roller.

2. The chain according to claim 1,
wherein hardness of each of the coatings is set to be 10 GPa to 25 GPa.

3. The chain according to claim 2,
wherein the film thickness on the outer circumferential surface of the bush and the film thickness on the outer circumferential surface of the roller are formed to be the same.

4. The chain according to any one of claims 1 to 3,
wherein a surface roughness of each of the coatings is Ra 0.025 µm to 0.4 µm, or Rz 0.025 µm to 2.5 µm.

5. The chain according to any one of claims 1 to 3,
wherein a surface roughness of the coating is Ra 0.025 µm to 0.25 µm.

6. The chain according to any one of claims 1 to 3,
wherein a surface roughness of each of the coatings is Ra 0.1 µm to 0.25 µm.

7. The chain according to claim 1,
further comprising a seal ring that is arranged between the outer plate and the inner plate and is configured to retain grease between the pin and the bush,
wherein a coating constituted of PTFE is applied onto a surface of the seal ring.

8. The chain according to claim 1,
further comprising a seal ring that is arranged between the outer plate and the inner plate and is configured to retain grease between the pin and the bush,
wherein a material of the seal ring is chosen from a group including acrylic rubber, hydrogenated nitrile rubber, nitrile rubber, fluorinated rubber, and PTFE.
